# EUROPEAN PATENT APPLICATION

(11) **EP 4 470 971 A1**
(43) Date of publication of application: **04.12.2024**
(21) Application number: 24166572.8
(22) Date of filing: 26.03.2024
(51) Int. Cl.: C01B 13/34, C01B 21/42

(54) **PROCESS FOR PRODUCING METAL OXIDES BY SPRAY ROASTING NITRATE**

(30) Priority: 29.03.2023 CN 202310319177
(71) Applicant: Chengdu Yizhi Technology Co., Ltd., Chengdu Sichuan Province (CN)
(72) Inventor: Su, Zonghua, Chengdu, Sichuan Province (CN); Wang, Hongmei, Chengdu, Sichuan Province (CN); Zhang, Boyuan, Chengdu, Sichuan Province (CN); Huang, Yan, Chengdu, Sichuan Province (CN); Wu, Zhiping, Chengdu, Sichuan Province (CN); Tian, Xiaoying, Chengdu, Sichuan Province (CN); Wan, Wen, Chengdu, Sichuan Province (CN); Gong, Yue, Chengdu, Sichuan Province (CN); Liu, Chao, Chengdu, Sichuan Province (CN); Long, Lihua, Chengdu, Sichuan Province (CN)
(74) Representative: Cabinet Chaillot

(57) **Abstract**

The present invention discloses a process for producing metal oxides by spray roasting nitrate, and pertains to the technical field of roasting processes, wherein a roasting furnace gas generated after roasting nitrate in a roasting furnace is cooled by a nitrate solution, and the furnace gas is cooled, absorbed, re-cooled and re-absorbed to produce regenerated nitric acid. Compared with the prior art, the present invention improves the process and equipment based on the prior art, and nitrate spray pyrolysis is used to produce a ternary battery material, which improves purity of the metal oxides, and avoids excessive chloride ions. The improved roasting furnace has the advantages of controllable product particle size, high product purity, good particle dispersion, high production efficiency, and low process temperature, and has the value of promotion and application.

## Description

### TECHNICAL FIELD

The present invention pertains to the technical field of roasting processes, and in particular pertains to a process for producing metal oxides by spray roasting nitrate.

### BACKGROUND

Spray roasting is a promising material preparation method, and has many advantages compared with conventional preparation techniques, such as controllable particle size, high product purity, good particle dispersion, high production efficiency and low process temperature, and has been applied in many fields of materials science.

In the prior art, patent No. CN 201921313792.2 which discloses a system for producing cobaltosic oxide using a spray roasting method and patent No. CN 201910747775.8 which discloses a system for producing cobaltosic oxide using a spray roasting method and a process for producing the same discloses how to produce metal oxides by spray roasting chlorides in spray roasting furnaces, but the patents have the disadvantages of high thermal decomposition temperature of the chlorides, great decomposition difficulty, and tending to lead to excessive chloride ions in the metal oxides. Therefore, the patents are not suitable for the production of metal oxides. Hence, there is a need for a roasting process suitable for metal oxides.

### SUMMARY

It is an object of the present invention to provide a process for producing metal oxides by spray roasting nitrate.

To achieve the above object, the present invention is carried out by the following technical solutions:
The present invention comprises the following steps:
S1: filtering a nitrate solution to remove impurities, concentrating the nitrate solution by a preconcentrator, feeding the nitrate solution to a roasting furnace, and pressurizing and spraying, by a roasting furnace feed pump, the nitrate solution into the roasting furnace for spray roasting to decompose the nitrate solution into nitrate decomposition products comprising metal oxides, NO₂ gas and water vapor;
S2: conveying a roasting furnace gas to the preconcentrator to cool down the roasting furnace gas generated after spraying roasting nitrate in the roasting furnace while concentrating newly fed nitrate solution, and purging off dust in the roasting furnace gas;
S3: dropping the metal oxides from a bottom of the roasting furnace, generating conveying air by a conveying fan, filtering the conveying air by a filter and then conveying metal oxide powder to a powder bin, simultaneously cooling the metal oxides with the conveying air, providing a sintered plate dust collector at a top of the powder bin, and providing a packaging machine at a bottom of the powder bin to package the metal oxides;
S4: feeding the roasting furnace gas from the preconcentrator to a primary cooling tower, a primary absorption tower, a secondary cooling tower and a secondary absorption tower or multi stages of cooling towers and absorption towers arranged alternately to absorb the NO₂ gas therein to form regenerated nitric acid, cooling down the roasting furnace gas while completing the absorption, and feeding the roasting furnace gas to an exhaust fan;
S5: scrubbing the roasting furnace gas again with an alkali scrubber provided behind the exhaust fan; and
S6: dedusting the gas passing through the scrubber with a wet electrostatic precipitator and discharging the gas outside battery limit through a stack.

Preferably, the preconcentrator is a venturi concentrator. The preconcentrator cools down the roasting furnace gas from 300-500°C to below 95°C, and concentrates the nitrate solution to 15-35%. In the step S1, a reaction temperature in the roasting furnace is 400-850°C. In the step S4, the roasting furnace gas is cooled down below 40°C while completing the absorption.

Further, the roasting furnace comprises a roasting furnace body, a rotary valve, a furnace body exhaust pipe, a combustion assembly fire path, a combustion gas regulating valve, an air regulating valve, a discharge temperature detector, an exhaust temperature detector, an exhaust pressure detector, a furnace body temperature detector, a fire path front temperature detector, a fire path rear temperature detector, an atomization spray nozzle, a solution regulating valve, a water supply regulating valve and a compressed air regulating valve; a lower end discharge port of the roasting furnace body is connected with the rotary valve, an exhaust port is provided at an upper end of the roasting furnace body, the exhaust port of the roasting furnace body is connected with one end of the furnace body exhaust pipe, a discharge end of the atomizing spray nozzle is located at an upper section in the roasting furnace body, and a combustion end of the combustion assembly fire path is located in the roasting furnace body; the combustion gas regulating valve and the air regulating valve are arranged at a feed end of the combustion assembly fire path; the combustion gas regulating valve and the air regulating valve are located outside the roasting furnace body; the discharge temperature detector is arranged at a feed end of the rotary valve; the exhaust temperature detector and the exhaust pressure detector are arranged on outer walls of a feed end and a discharge end of the furnace body exhaust pipe respectively; a plurality of furnace body temperature detectors are arranged, and the plurality of furnace body temperature detectors are respectively arranged on a side wall of the roasting furnace body; the fire path front temperature detector and the fire path rear temperature detector are respectively arranged on side walls of a discharge end and the feed end of the combustion assembly fire path; a feed end of the atomizing spray nozzle is simultaneously connected with discharge ends of the water supply regulating valve, the compressed air regulating valve and the solution regulating valve; and a feed end of the solution regulating valve is connected to a solution supply assembly, a feed end of the water supply regulating valve is connected to a water supply assembly, and a feed end of the compressed air regulating valve is connected to a gas supply device.

As an improvement, a lump crusher and a crusher drive motor are provided between a discharge end of the roasting furnace body and the rotary valve, a feed end of the lump crusher is connected with the discharge end of the roasting furnace body, a discharge end of the lump crusher is connected with the rotary valve, and a drive end of the lump crusher is connected with a drive output shaft of the crusher drive motor.

Preferably, a plurality of atomizing spray nozzles are arranged, and the plurality of atomizing spray nozzles are all located at the upper section in the roasting furnace body.

As an improvement, an air flow sensor is provided between the combustion assembly fire path and the air regulating valve, a combustion gas flow sensor is provided between the combustion assembly fire path and the combustion gas regulating valve, a flame detector is provided on the combustion assembly fire path, and a detection end of the flame detector is located in the combustion assembly fire path.

The present invention has the following beneficial effects:
The present invention discloses a process for producing metal oxides by spray roasting nitrate. Compared with the prior art, the present invention improves the process and equipment based on the prior art, and nitrate spray pyrolysis is used to produce a ternary battery material, which improves purity of the metal oxides, and avoids excessive chloride ions. The improved roasting furnace has the advantages of controllable product particle size, high product purity, good particle dispersion, high production efficiency, and low process temperature, and has the value of promotion and application.

### BRIEF DESCRIPTION OF THE DRAWINGS

FIG. 1 is a flow diagram of a process according to the present invention;
FIG. 2 is a schematic structural diagram of a roasting furnace according to the present invention; and
FIG. 3 is a schematic structural diagram of a combustion assembly according to the present invention.

Reference numerals in the drawings: 1. roasting furnace body; 2. combustion assembly fire path; 3. atomizing spray nozzle; 4. solution regulating valve; 5. water supply regulating valve; 6. compressed air regulating valve; 7. lump crusher; 8. rotary valve; 9. crusher drive motor; 10. discharge temperature detector; 11. furnace body exhaust pipe; 12. exhaust temperature detector; 13. exhaust pressure detector; 14. furnace body temperature detector; 15. combustion gas regulating valve; 16. air regulating valve; 17. fire path front temperature detector; 18. fire path rear temperature detector; 19. air flow sensor; 20. combustion gas flow sensor; 21. and flame detector.

### DESCRIPTION OF THE EMBODIMENTS

The present invention will now be further described with reference to the accompanying drawings and specific embodiments. Illustrative embodiments and descriptions of the present invention herein are intended to illustrate, but not to limit, the present invention.

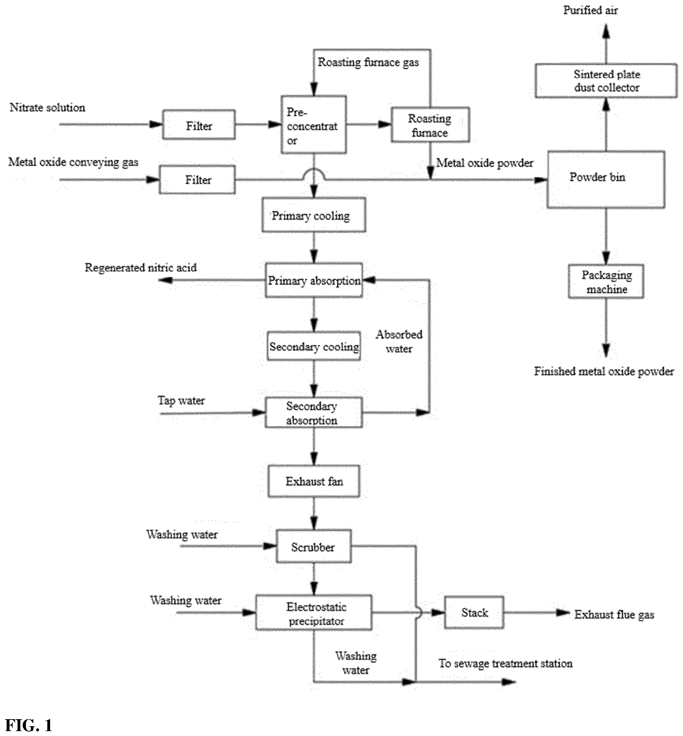

As shown in FIG. 1, the present invention comprises the following steps:
S1: filtering a nitrate solution to remove impurities, concentrating the nitrate solution by a preconcentrator, feeding the nitrate solution to a roasting furnace, and pressurizing and spraying, by a roasting furnace feed pump, the nitrate solution into the roasting furnace for spray roasting to decompose the nitrate solution into nitrate decomposition products comprising metal oxides, NO₂ gas and water vapor (which also contains oxygen, NO, NO₂, N₂O₃ and N₂O₄, and a main component is NO₂);
S2: conveying a roasting furnace gas to the preconcentrator to cool down the roasting furnace gas (NO₂, H₂O, combustion exhaust gas and dust) generated after spraying roasting nitrate in the roasting furnace from 300-500°C to below 95°C while concentrating newly fed nitrate solution (the nitrate solution is concentrated to 15-35%), and purging off dust in the roasting furnace gas;
S3: dropping the metal oxides from a bottom of the roasting furnace, generating conveying air by a conveying fan, filtering the conveying air by a filter and then conveying metal oxide powder to a powder bin, simultaneously cooling the metal oxides with the conveying air, dedusting and purifying the metal oxide powder by a sintered plate dust collector provided at a top of the powder bin and discharging purified air, allowing bottom powder collected by the sintered plate dust collector to fall back to the powder bin, and packaging the metal oxides with a packaging machine provided at a bottom of the powder bin;
S4: feeding the roasting furnace gas from the preconcentrator to a primary cooling tower, a primary absorption tower, a secondary cooling tower and a secondary absorption tower or multi stages of cooling towers and absorption towers arranged alternately to absorb the NO₂ gas therein to form regenerated nitric acid, cooling down the roasting furnace gas while completing the absorption, and feeding the roasting furnace gas to an exhaust fan;
S5: scrubbing the roasting furnace gas again with an alkali (or ammonia) scrubber provided behind the exhaust fan, and discharging washing wastewater to a sewage treatment station for treatment to ensure standard-meeting discharge; and
S6: dedusting the gas passing through the scrubber with a wet electrostatic precipitator and discharging the gas outside battery limit through a stack, and discharging washing wastewater from the wet electrostatic precipitator to the sewage treatment station for treatment. An exhaust flue gas temperature is lower than 40°C, a water vapor content is lower than 10%, and other indicators are lower than values as specified in the national discharge standard. As another solution, the gas passing through the scrubber may also subject to selective catalytic reduction (SCR) denitration technology to meet nitrogen oxide standard, and is then discharged outside battery limit through a stack.

Absorption of nitrogen oxides is carried out by cooling + absorption + cooling + absorption, which is conducive to formation of HNO₃ and increasing its concentration. Since the absorption of nitrogen oxides to form nitric acid is an exothermic reaction and a low temperature is conducive to the absorption of nitrogen oxides, the roasting furnace gas needed to be cooled down below 35°C. Diluted nitric acid facilitates the absorption of nitrogen oxides, and the diluted nitric acid formed by secondary absorption serves as an absorption liquid in the primary absorption tower, and nitric acid is formed at a bottom of the primary absorption tower and discharged to a nitric acid tank.

Preferably, the preconcentrator is a venturi concentrator. The preconcentrator cools down the roasting furnace gas from 300-500°C to below 95°C, and concentrates the nitrate solution to 15-35%. In the step S1, a reaction temperature in the roasting furnace is 400-850°C (reaction efficiency significantly decreases below 400°C, and particle morphology of the generated metal oxides is affected above 850°C). In the step S4, the roasting furnace gas is cooled down below 40°C while completing the absorption.

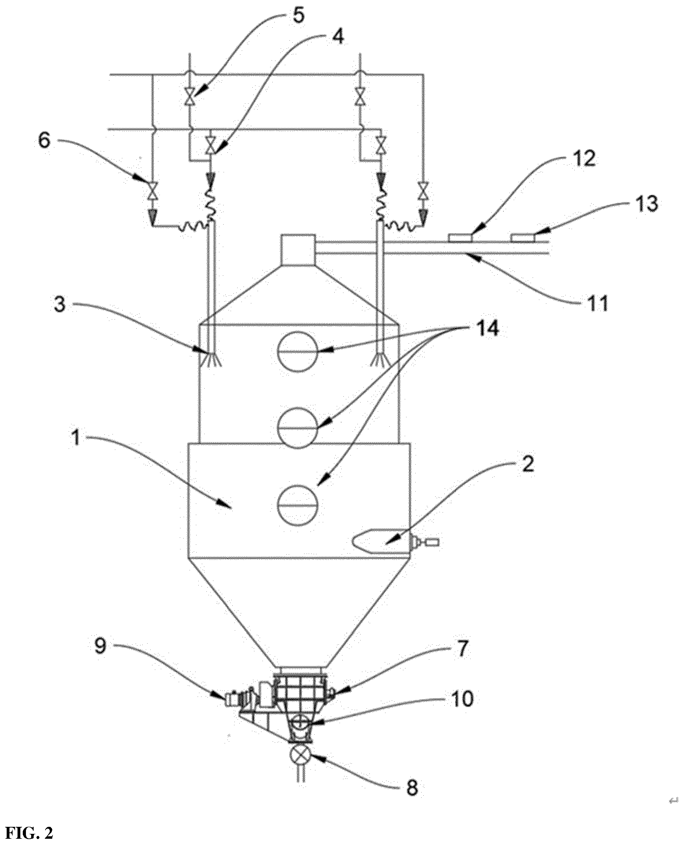

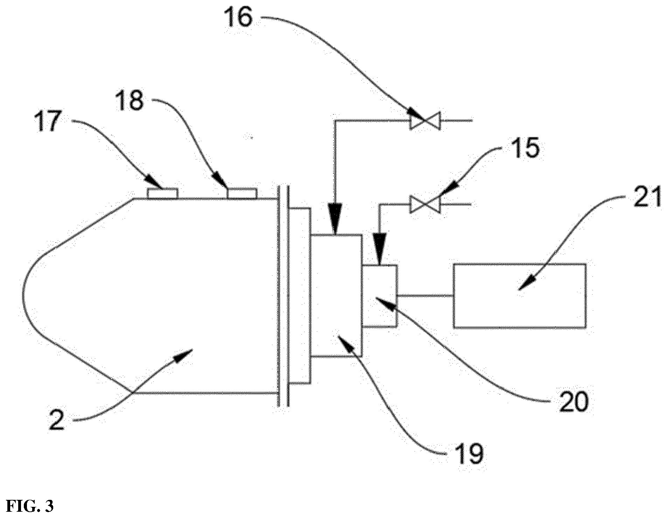

As shown in FIGS. 2 and 3, the roasting furnace comprises a roasting furnace body 1, a rotary valve 8, a furnace body exhaust pipe 11, a combustion assembly fire path 2, a combustion gas regulating valve 15, an air regulating valve 16, a discharge temperature detector 10, an exhaust temperature detector 12, an exhaust pressure detector 13, a furnace body temperature detector 14, a fire path front temperature detector 17, a fire path rear temperature detector 18, an atomization spray nozzle 3, a solution regulating valve 4, a water supply regulating valve 5 and a compressed air regulating valve 6; a lower end discharge port of the roasting furnace body 1 is connected with the rotary valve 8, an exhaust port is provided at an upper end of the roasting furnace body 1, the exhaust port of the roasting furnace body 1 is connected with one end of the furnace body exhaust pipe 11, a discharge end of the atomizing spray nozzle 3 is located at an upper section in the roasting furnace body 1, and a combustion end of the combustion assembly fire path 2 is located in the roasting furnace body 1; the combustion gas regulating valve 15 and the air regulating valve 16 are arranged at a feed end of the combustion assembly fire path 2; the combustion gas regulating valve 15 and the air regulating valve 16 are located outside the roasting furnace body 1; the discharge temperature detector 10 is arranged at a feed end of the rotary valve 8; the exhaust temperature detector 12 and the exhaust pressure detector 13 are arranged on outer walls of a feed end and a discharge end of the furnace body exhaust pipe 11 respectively; a plurality of furnace body temperature detectors 14 are arranged, and the plurality of furnace body temperature detectors 14 are respectively arranged on a side wall of the roasting furnace body 1; the fire path front temperature detector 17 and the fire path rear temperature detector 18 are respectively arranged on side walls of a discharge end and the feed end of the combustion assembly fire path 2; a feed end of the atomizing spray nozzle 3 is simultaneously connected with discharge ends of the water supply regulating valve 5, the compressed air regulating valve 6 and the solution regulating valve 4; and a feed end of the solution regulating valve 4 is connected to a solution supply assembly, a feed end of the water supply regulating valve 5 is connected to a water supply assembly, and a feed end of the compressed air regulating valve 6 is connected to a gas supply device.

As an improvement, a lump crusher 7 and a crusher drive motor 9 are provided between a discharge end of the roasting furnace body 1 and the rotary valve 8, a feed end of the lump crusher 7 is connected with the discharge end of the roasting furnace body 1, a discharge end of the lump crusher 7 is connected with the rotary valve 8, and a drive end of the lump crusher 7 is connected with a drive output shaft of the crusher drive motor 9.

Preferably, a plurality of atomizing spray nozzles 3 are arranged, and the plurality of atomizing spray nozzles 3 are all located at the upper section in the roasting furnace body 1.

As an improvement, an air flow sensor 19 is provided between the combustion assembly fire path 2 and the air regulating valve 16, a combustion gas flow sensor 20 is provided between the combustion assembly fire path 2 and the combustion gas regulating valve 15, a flame detector 21 is provided on the combustion assembly fire path 2, and a detection end of the flame detector 21 is located in the combustion assembly fire path 2.

The fire path front temperature detector 17 is arranged at an outlet of the combustion assembly fire path 2 for detecting temperature of a high-temperature gas introduced into an interior of the roasting furnace after the combustion is completed, and the temperature is controlled at 800-1200°C to better complete a pyrolytic reaction in the roasting furnace. If only one thermometer is used to detect combustion reaction temperature of hot gas only, and temperature of the gas after completion of combustion is not detected, it is not conducive to accurately controlling the reaction temperature in the roasting furnace. It is conducive to controlling the reaction temperature inside the roasting furnace, increasing the reaction efficiency and controlling metal oxide particles by providing the fire path front temperature detector 17 to detect the temperature of the hot gas introduced into the interior of the roasting furnace after the completion of combustion.

A solution introduced into the interior of the roasting furnace is subject to multi-material atomization, which reduces atomized particles and makes spray roasting reaction easier. The furnace body temperature detector 14 is arranged at a straight section of the roasting furnace to detect temperature of each section inside the roasting furnace, which is conducive to controlling the reaction temperature inside the roasting furnace.

A roasting process in the roasting furnace is as follows:
1: A solution is introduced into the atomizing spray nozzle 3 through the solution regulating valve 4, and compressed air is also introduced into the atomizing spray nozzle 3 through the compressed air regulating valve 6, and the solution is atomized into 10-300 µm particles and sprayed into the interior of the roasting furnace body 1 for spray roasting;
2: A pyrolytic reaction is carried out inside the roasting furnace body 1 to produce metal oxides and nitrogen oxides;
3: A nitrogen oxide gas generated by the reaction and a combustion waste gas, and excess air are discharged from the top of the roasting furnace body 1, and the exhaust temperature detector 12 and the exhaust pressure detector 13 detect temperature and pressure respectively, and the gas in the roasting furnace body 1 proceeds to a subsequent cooling and absorption process;
4: The metal oxides generated by the reaction is fed to a powder delivery system from the bottom of the roasting furnace body 1 through the lump crusher 7 and the rotary valve 8; and
5: The combustion gas and the air introduced into a combustion assembly respectively through the combustion gas regulating valve 15 and the air regulating valve 16 are combusted in the combustion assembly fire path 2, and the high-temperature gas after the completion of combustion is introduced into the interior of the roasting furnace body 1 to provide heat for the reaction inside the roasting furnace body 1.

### Embodiment 1:

S1: A nitrate solution was filtered to remove impurities, concentrated by a preconcentrator and then fed to a roasting furnace, and the nitrate solution was pressurized and sprayed by a roasting furnace feed pump into the roasting furnace for spray roasting and decomposition;
S2: A roasting furnace gas was conveyed to the preconcentrator, the preconcentrator cooled down the roasting furnace gas generated after spray roasting nitrate in the roasting furnace from 300°C to less than 85°C while concentrating the nitrate solution to 15%, and dust in the roasting furnace gas was purged off;
S3: the metal oxides dropped from a bottom of the roasting furnace, a conveying air was generated by a conveying fan, the conveying air is filtered by a filter and then conveyed metal oxide powder to a powder bin, the metal oxides were simultaneously cooled with the conveying air, the metal oxide powder was dedusted and purified by a sintered plate dust collector provided at a top of the powder bin and purified air was discharged, bottom powder collected by the sintered plate dust collector fell back to the powder bin, and the metal oxides were packaged with a packaging machine provided at a bottom of the powder bin;
S4: the roasting furnace gas from the preconcentrator was feed to a primary cooling tower, a primary absorption tower, a secondary cooling tower and a secondary absorption tower or multi stages of cooling towers and absorption towers arranged alternately to absorb the NO₂ gas therein to form regenerated nitric acid, and the roasting furnace gas was cooled down while completing the absorption, and fed to an exhaust fan;
S5: the roasting furnace gas was scrubbed again with an alkali (or ammonia) scrubber provided behind the exhaust fan, and washing wastewater was discharged to a sewage treatment station for treatment to ensure standard-meeting discharge; and
S6: the gas passing through the scrubber was dedusted with a wet electrostatic precipitator and discharged outside battery limit through a stack, and washing wastewater from the wet electrostatic precipitator was also discharged to the sewage treatment station for treatment. An exhaust flue gas temperature is lower than 40°C, a water vapor content is lower than 10%, and other indicators are lower than values as specified in the national discharge standard.

Technical parameters of the metal oxides obtained by roasting in the above Embodiment 1 are shown in the following table 1:

### Particle size characteristic parameter Table 1 (unit: µm)

| | | | | |
|---|---|---|---|---|
| D03=0.88 | D06=1.45 | D10=2.39 | D16=4.22 | D25=8.25 |
| D75=34.67 | D84=43.60 | D90=52.81 | D97=73.33 | D98=79.05 |

In the table, D represents diameter; 03, 06......97 and 98 represent percentages, for example, D03=0.88 µm, which means that in particle size distribution, a corresponding particle diameter value when cumulative distribution percentage reaches 3% from small to large particle diameters is 0.88 µm; and in this embodiment, a median particle size (D50) is 20 µm; a volume average particle diameter D[4,3] is 24.39 µm, and an area average particle diameter D[3,2] is 5.76 µm.

### Embodiment 2:

Unlike Embodiment 1, the preconcentrator cooled down the roasting furnace gas from 500°C to 90°C, and concentrated the nitrate solution to 35%.

Technical parameters of the metal oxides obtained by roasting in the above Embodiment 2 are shown in the following table 2:

### Particle size characteristic parameter Table 2 (unit: µm)

| | | | | |
|---|---|---|---|---|
| D03=0.6 | D06=1.19 | D10=3.14 | D16=4.75 | D25=6.11 |
| D75=11.70 | D84=17.9 | D90=19.15 | D97=27.91 | D98=38.42 |

In the table, D represents diameter; 03, 06......97 and 98 represent percentages, for example, D03=0.6 µm, which means that in particle size distribution, a corresponding particle diameter value when cumulative distribution percentage reaches 3% from small to large particle diameters is 0.6 µm; and in this embodiment, a median particle size (D50) is 10.0 µm; a volume average particle diameter D[4,3] is 12.09 µm, and an area average particle diameter D[3,2] is 2.85 µm.

### Embodiment 3:

Unlike Embodiment 1, the preconcentrator cooled down the roasting furnace gas from 380°C to 80°C, and concentrated the nitrate solution to 25%.

Technical parameters of the metal oxides obtained by roasting in the above Embodiment 3 are shown in the following table 3:

### Particle size characteristic parameter Table 3 (unit: µm)

| | | | | |
|---|---|---|---|---|
| D03=0.79 | D06=1.79 | D10=2.14 | D16=2.75 | D25=3.32 |
| D75=6.07 | D84=7.19 | D90=7.59 | D97=8.51 | D98=10.52 |

In the table, D represents diameter; 03, 06......97 and 98 represent percentages, for example, D03=0.79 µm, which means that in particle size distribution, a corresponding particle diameter value when cumulative distribution percentage reaches 3% from small to large particle diameters is 0.79 µm; and in this embodiment, a median particle size (D50) is 4.9 µm; a volume average particle diameter D[4,3] is 3.98 µm, and an area average particle diameter D[3,2] is 0.83 µm.

According to analysis of the results of the above Embodiments 1-3, technical effects obtained by the process parameters of Embodiment 3 are superior to those of Embodiments 1 and 2.

The technical solutions of the present invention are not limited to the above-mentioned specific embodiments, and all the technical modifications made according to the technical solutions of the present invention fall within the scope of the present invention.

## Claims

1. A process for producing metal oxides by spray roasting nitrate, comprising the following steps:
S1: filtering a nitrate solution to remove impurities, concentrating the nitrate solution by a preconcentrator, feeding the nitrate solution to a roasting furnace, and pressurizing and spraying, by a roasting furnace feed pump, the nitrate solution into the roasting furnace for spray roasting to decompose the nitrate solution into nitrate decomposition products comprising metal oxides, NO₂ gas and water vapor;
S2: conveying a roasting furnace gas to the preconcentrator to cool down the roasting furnace gas generated after spraying roasting nitrate in the roasting furnace while concentrating newly fed nitrate solution, and purging off dust in the roasting furnace gas;
S3: dropping the metal oxides from a bottom of the roasting furnace, generating conveying air by a conveying fan, filtering the conveying air by a filter and then conveying metal oxide powder to a powder bin, simultaneously cooling the metal oxides with the conveying air, providing a sintered plate dust collector at a top of the powder bin, and providing a packaging machine at a bottom of the powder bin to package the metal oxides;
S4: feeding the roasting furnace gas from the preconcentrator to a primary cooling tower, a primary absorption tower, a secondary cooling tower and a secondary absorption tower or multi stages of cooling towers and absorption towers arranged alternately to absorb the NO₂ gas therein to form regenerated nitric acid, cooling down the roasting furnace gas while completing the absorption, and feeding the roasting furnace gas to an exhaust fan;
S5: scrubbing the roasting furnace gas again with an alkali scrubber provided behind the exhaust fan; and
S6: dedusting the gas passing through the scrubber with a wet electrostatic precipitator and discharging the gas outside battery limit through a stack; and
wherein the roasting furnace comprises a roasting furnace body (1), a rotary valve (8), a furnace body exhaust pipe (11), a combustion assembly fire path (2), a combustion gas regulating valve (15), an air regulating valve (16), a discharge temperature detector (10), an exhaust temperature detector (12), an exhaust pressure detector (13), a furnace body temperature detector (14), a fire path front temperature detector (17), a fire path rear temperature detector (18), an atomization spray nozzle (3), a solution regulating valve (4), a water supply regulating valve (5) and a compressed air regulating valve (6); a lower end discharge port of the roasting furnace body (1) is connected with the rotary valve (8), an exhaust port is provided at an upper end of the roasting furnace body (1), the exhaust port of the roasting furnace body (1) is connected with one end of the furnace body exhaust pipe (11), a discharge end of the atomizing spray nozzle (3) is located at an upper section in the roasting furnace body (1), and a combustion end of the combustion assembly fire path (2) is located in the roasting furnace body (1); the combustion gas regulating valve (15) and the air regulating valve (16) are arranged at a feed end of the combustion assembly fire path (2); the combustion gas regulating valve (15) and the air regulating valve (16) are located outside the roasting furnace body (1); the discharge temperature detector (10) is arranged at a feed end of the rotary valve (8); the exhaust temperature detector (12) and the exhaust pressure detector (13) are arranged on outer walls of a feed end and a discharge end of the furnace body exhaust pipe (11) respectively; a plurality of furnace body temperature detectors (14) are arranged, and the plurality of furnace body temperature detectors (14) are respectively arranged on a side wall of the roasting furnace body (1); the fire path front temperature detector (17) and the fire path rear temperature detector (18) are respectively arranged on side walls of a discharge end and the feed end of the combustion assembly fire path (2); a feed end of the atomizing spray nozzle (3) is simultaneously connected with discharge ends of the water supply regulating valve (5), the compressed air regulating valve (6) and the solution regulating valve (4); and a feed end of the solution regulating valve (4) is connected to a solution supply assembly, a feed end of the water supply regulating valve (5) is connected to a water supply assembly, and a feed end of the compressed air regulating valve (6) is connected to a gas supply device.

2. The process according to claim 1, wherein the preconcentrator is a venturi concentrator.

3. The process according to claim 1, wherein the preconcentrator cools down the roasting furnace gas from 300-500°C to below 95°C, and concentrates the nitrate solution to 15-35%.

4. The process according to claim 1, wherein in the step S1, a reaction temperature in the roasting furnace is 400-850°C.

5. The process according to claim 1, wherein in the step S4, the roasting furnace gas is cooled down below 40°C while completing the absorption.

6. The process according to claim 1, wherein a lump crusher (7) and a crusher drive motor (9) are provided between a discharge end of the roasting furnace body (1) and the rotary valve (8), a feed end of the lump crusher (7) is connected with the discharge end of the roasting furnace body (1), a discharge end of the lump crusher (7) is connected with the rotary valve (8), and a drive end of the lump crusher (7) is connected with a drive output shaft of the crusher drive motor (9).

7. The process according to claim 1, wherein a plurality of atomizing spray nozzles (3) are arranged, and the plurality of atomizing spray nozzles (3) are all located at the upper section in the roasting furnace body (1).

8. The process according to claim 1, wherein an air flow sensor (19) is provided between the combustion assembly fire path (2) and the air regulating valve (16), a combustion gas flow sensor (20) is provided between the combustion assembly fire path (2) and the combustion gas regulating valve (15), a flame detector (21) is provided on the combustion assembly fire path (2), and a detection end of the flame detector (21) is located in the combustion assembly fire path (2).
